(19) **Europäisches Patentamt / European Patent Office / Office européen des brevets**

(11) **EP 4 624 994 A1**

(12) # EUROPEAN PATENT APPLICATION

(43) Date of publication:
01.10.2025 Bulletin 2025/40

(21) Application number: 24167768.1

(22) Date of filing: 28.03.2024

(51) International Patent Classification (IPC):
*G01S 13/90* (2006.01)

(52) Cooperative Patent Classification (CPC):
**G01S 13/9029; G01S 13/9052**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Iceye Oy**
**02150 Espoo (FI)**

(72) Inventor: **FRIBERG, Tapio**
**02150 Espoo (FI)**

(74) Representative: **Crowell & Moring U.K. LLP**
**199 Bishopsgate**
**London, EC2M 3TY (GB)**

(54) **SAR VIDEO SURFACE FLOW ESTIMATION**

(57) Data obtained from synthetic aperture radar "SAR" image acquisition apparatus on a satellite, operating in orbit around Earth, is processed to form looks at a target area on Earth at different points in time. Dense optical flow is computed to identify apparent motion between successive looks and to determine apparent velocity for at least some pixels between successive looks. The apparent velocity is converted into actual velocity by correction for the relative motion between the platform and the target. A 2D velocity map of motion in the target area may be generated.

Figure 3

EP 4 624 994 A1

**Description**

The invention is in the field of analysing data from satellites or other air or spacecraft with synthetic aperture radar "SAR" imaging capability.

**BACKGROUND**

An existing problem in the field of SAR is how to observe and estimate movements of objects and movements over large areas on Earth. For example, interferometric SAR (inSAR) can be used for change detection to determine whether small amounts of movement have occurred (e.g., land creep) between two images. However, the two images are often taken days or weeks apart, so this technique is not capable of capturing fast-changing dynamic movement or larger scale movements. For example, inSAR cannot be used for estimating wind speeds based on waves in the ocean or other types of dynamic movements that can be observed from the air or from space.

Resolution in a radar image is related to the length of the antenna being used. Larger antennas generally provide better resolution. However, larger antennas are not always practical or economical in airborne and spaceborne applications (particularly spaceborne). SAR makes use of a moving platform and the Doppler effect to achieve higher resolutions in the azimuth direction than would be possible using a stationary antenna of the same size. However, moving objects affect the Doppler frequency of backscattered radar energy, and hence can appear displaced from their true locations in a SAR image. Traditionally, one method to track motion using SAR data has been to measure the displacement of an object in a single SAR image and then to estimate the object's velocity based on this displacement. This, however, requires first identifying the moving object in an image and measuring this displacement to determine its velocity. In particular, these methods also do not work as well with mixed movements over larger areas, especially when there are movements in all different directions and velocities.

Attempts have been made to estimate such surface phenomena (e.g., wind speeds using SAR data). Notably, all of these techniques have also been based on a single SAR image. These methods suffer from various problems, and have typically only been able to achieve resolutions in the order of kilometres. In one example, SAR imagery is used to determine wind velocities from SAR images by its impact on the ocean surface, but the resolution is on the order of 25-50 kilometres. Furthermore, the method requires pre-knowledge of the wind direction. In another approach, the Doppler Centroid Anomaly is used to estimate wind fields to establish trends over a relatively large area.

**SUMMARY**

The invention is defined by the claims. The invention builds on the work disclosed in WO2023285432 and is based on the surprising discovery that SAR image data, as opposed to frequency data, may be processed to track motion on the surface of the earth to yield results with resolutions far surpassing those achieved with previous SAR data analysis techniques, for example in the order of tens of meters. This is achieved using adapted optical flow computations, described in more detail below.

In one aspect there is provided here a method of detecting motion in a target area by processing data obtained from synthetic aperture radar "SAR" image acquisition apparatus on a moving platform. The data is processed to form "looks" at the target area centred on different points in time. The method comprises computing optical flow to identify apparent motion between successive looks. In this way, motion within a scene may be quickly detected.

The term "apparent" is used here to refer to actual, or real, motion and other apparent motion which may result from the manner of acquisition of the SAR data, also referred to here as "non-real" or "false" motion. Further, real motion may be identified but incorrectly parameterised. The computation of optical flow may comprise estimating an apparent velocity for at least some pixels between successive looks. This estimated apparent velocity, or velocity of apparent motion, obtained from optical flow computation may be incorrect in terms of magnitude and direction.

Simply detecting motion within a scene from SAR data, even with such inaccuracies, is useful. However, there are also described here methods in which the optical flow computation is corrected to compensate for the motion of the SAR platform relative to the target. For example, this may comprise correcting estimated apparent velocity for the motion of the SAR platform relative to the target. Thus a real velocity of motion detected in the SAR data is estimated. In other words, the velocity of real motion detected in the SAR data is estimated.

The methods described here may be implemented in the form of a computer algorithm for processing SAR data and therefore there is also provided here a computer readable medium, in transitory or non-transitory form, comprising instructions which when implemented in a computing system cause the system to perform any of the methods described here.

The methods described here have proved to be particularly useful to track wave motion but are expected to have other applications, not necessarily limited to space-borne SAR.

Previously it was not thought possible to use satellite SAR imagery to monitor a constantly changing surface such as the surface of the sea. Conversely it was not expected that data obtained in a time window as short as 25 seconds would yield useful insights into the motion of a constantly changing surface.

In addition to detecting, and optionally tracking, motion in a target area such as on the surface of the earth, the methods described here may be used to estimate velocities of surface motion. Due to the high resolution of the satellite image data this may be achieved at a higher resolution than previously possible. It will be appreciated that this may have many applications including but not limited to monitoring of wave motion, flooding, and spills of oil as noted above. The higher resolution may also allow estimation of surface flow around areas such as capes and harbours as well as around small islands. Surface velocity of rivers can be estimated. Oil spill trajectories can be predicted. Also, since surface motion is often related to wind speed, this estimation of the velocity of a fluid body may be used to estimate wind speeds with greater accuracy than has previously been achieved using satellite data. Other types of surface motion could also be tracked using the methods described here such as but not limited to the flow of lava, migration of animals and movement of manmade objects such as vehicles, trains, ships and aeroplanes.

Extended dwell times as described in WO2023285432 may be used to obtain the raw data. The extended dwell times may be achieved by mechanical steering of the satellite.

Any of the methods described here may be implemented in a computing system, either on the satellite or at another location or distributed between Earth and space. For example a processor at a ground station may be configured to process the raw SAR data according to the methods described here.

There is also described here a computer readable medium comprising instructions, for example in the form of an algorithm, which, when implemented in a computing system forming part of a satellite operation system, cause the system to perform any of the methods described here.

Features of different aspects and embodiments of the invention may be combined as appropriate, as would be apparent to a skilled person, and may be combined with any of the aspects of the invention.

**BRIEF DESCRIPTION OF THE DRAWINGS**

Embodiments of the invention will be described, by way of example only and with reference to the following drawings, in which:

Figure 1 is a flowchart illustrating a method of processing SAR data to track motion on the earth's surface;

Figures 2A and 2B show examples of images obtained from successive looks at the same area on the earth.

Figure 3 is an example of a 2D mean velocity map superimposed on top of the SAR image of the area shown in Figures 2A and 2B;

Figure 4A is a detailed view of part of the 2D velocity map and SAR image shown in Figure 3;

Figure 4B is the detailed view of Figure 4A but only showing the 2D velocity map;

Figure 5A shows the same 2D velocity map of figure 3 which has been shaded and brightness coded to more easily identify areas with similar motion characteristics;

Figure 5B shows a mean velocity magnitude histogram of the 2D mean velocity map shown in Figure 3 and Figure 5.

Figure 6A is a flowchart of a method for correcting estimated apparent velocity;

Figure 6B is a schematic diagram showing a satellite imaging a target at an incidence angle.

Figure 6C is a schematic diagram showing a satellite imaging a target with different squint angles.

Figure 6D shows three 2D velocity maps calculated between different pairs of sub-aperture images obtained in a single acquisition.

Figure 7 is a schematic diagram of a satellite operating in spotlight mode;

Figure 8 schematically illustrates generation of multi-look and overlapping images.

Figure 9 is an example of a satellite image showing an area including a river and swamp land;

Figure 10 is a 2D mean velocity map formed by optical flow computation using successive images of the area shown in figure 9;

Figure 11 is a shade and brightness coded 2D mean velocity map based on the map of figure 10;

Figure 12 is an example of a satellite image showing various feature including a lava field and lava flows;

Figure 13 is an example of a satellite image comprising the lava fields and lava flow of Figure 12, superimposed with a 2D mean velocity map.

Figure 14 is a detailed view of the image in Figure 13 superimposed with the 2d mean velocity map showing the lava flows flowing out from a fissure.

Common reference numerals are used throughout the figures to indicate similar features.

## DETAILED DESCRIPTION

Embodiments of the present invention are described below by way of example only. These examples represent the best ways of putting the invention into practice that are currently known to the applicant although they are not the only ways in which this could be achieved.

### Motion Tracking

There are described here methods of tracking motion on the surface of the earth by processing data obtained from synthetic aperture radar "SAR" image acquisition apparatus. Examples of the methods have been implemented using data obtained from SAR apparatus on a satellite operating in orbit around Earth, such as described in WO2023285432. WO2023285432 discloses a SAR-equipped satellite operable to prolong a dwell time, during which a selected target is visible from the satellite, as the satellite orbits over the target. The acquired raw SAR data may be processed in a number of ways to provide image information including forming multi-look images and compiling video sequences. Dwell times of up to 25s are mentioned. These methods are particularly applicable to the class of satellites known as micro satellites. These are designed to have a weight in the range 50 kg - to 250 kg.

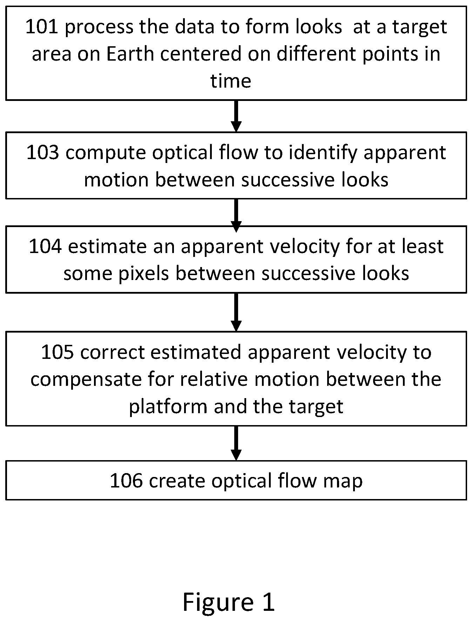

Figure 1 is a flowchart illustrating a method of tracking motion on the surface of the earth by processing data obtained from synthetic aperture radar "SAR" image acquisition apparatus. The apparatus may be on any suitable platform. The following describes particular examples where the SAR image acquisition apparatus is carried on a satellite. The method may begin at step 101 with processing SAR data to form "looks" at a target area on Earth at different points in time. Alternatively the data may have been previously processed to form successive looks.

The term "look" is used here to describe SAR echo data resulting from radio frequency pulses transmitted from the SAR apparatus to earth. It should be noted here that for motion tracking it is desirable but not essential to form a visible image corresponding to each look, since it is the SAR data that is processed in order to track the motion. Each look may be formed using data from a series of pulses. The respective pulse series used to form successive looks may overlap in time, in other words some of the same echo data may be comprised in consecutive looks. Thus different looks may be derived from data acquired over different time periods, in other words centered on different time periods.

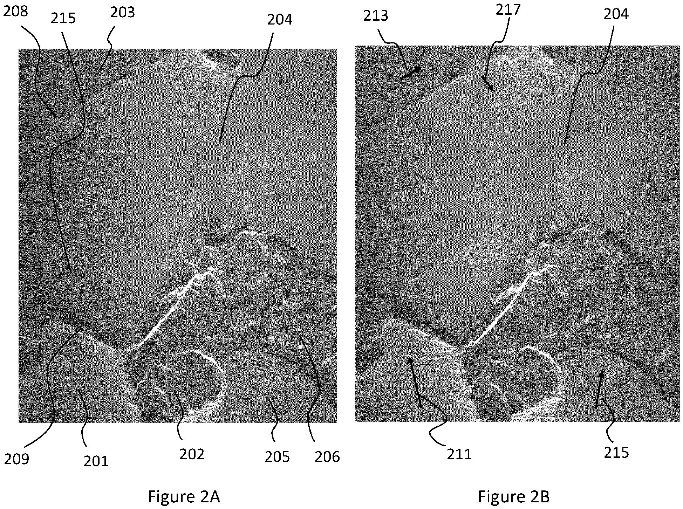

Figures 2A and 2B show examples of SAR images obtained from successive looks at the same area on the earth. Referring to Figure 2A, the area imaged by the SAR satellite is of a coastal area with a headland 202 extending out into the ocean with water on three sides of it. The headline 202 is visible at the bottom centre of the SAR image with a small bay 201 and another bay 205 on either side. Incoming ocean waves are visible in the bays 201 and 205. An area 206 with buildings and other urban infrastructure is shown at the bottom right of the image. Above the headland is a sheltered harbour area 204 protected by breakwaters 208 and 209. Two moving ships 215 are visible on the left side of the image in harbour 204 close to breakwater 209. Area 203 is outside of breakwater 208, but the water there is less wavy than in bays 201 and 205 because the water there is protected by a larger bay (not shown).

These two images are stills from a video obtained according to the techniques described in WO2023285432. While motion may be difficult to discern from the stills, in the video there is apparent wave motion in the directions indicated by the arrows in Figure 2B. In bay 201 and 205, the waves are relatively large and are coming into the land, as indicated by arrows 211 and 215 respectively. In area 203, we see smaller waves travelling up and to the right in the image as indicated by arrow 213. In area 204, the water is relatively calm as it is protected by the breakwater 209 so there is very little motion visible, although in the video there appear to be some small waves coming through the gap in the breakwater as indicated by arrow 217. It should be noted here that in this example, the images were obtained using X-band radar operating at a frequency range of 9.5 - 9.8 GHz. X-band radar does not penetrate water well and therefore underwater features are not visible. Any apparent features on the water surface may be for example exposed rocks, oil slicks or other floating features.

As with the example of figures 2A and 2B,The SAR echo data processed in operation 101 of figure 1 may have been obtained in a single dwell period of the satellite over the target, in which case the processing at step 101 may comprise processing a single acquisition during the dwell period into multiple sub-apertures, with each sub-aperture corresponding to one look and one period of time during the dwell period, as explained further below.

At step 103 optical flow is computed to identify apparent motion between successive looks. Optical flow is a technique typically used in optical image processing and is described as the motion of objects between consecutive frames of a sequence, caused by the relative movement between the object and camera. Prior art examples of optical flow techniques have used successive frames of a video taken from a stationary optical camera in order to identify motion between one frame and the next, such as analysing traffic from a distance of tens of metres. Optical flow algorithms are known In the art and may be used to perform this step.

We are not aware that optical flow techniques have been applied to SAR image data to date. SAR imaging is based on transmitting radar energy and capturing the returning backscattered and reflected echoes, and then locating features based on the time it takes for a radar pulse to travel to the target and for the energy to return. As such, SAR is more akin to sonar than it is to photography with a camera, which is a passive technique that simply records the light being reflected by the object. SAR has some significant advantages over optical techniques, such as the ability to see through clouds and to operate in the absence of light (e.g., at night), but the processing of SAR data to form an image is far more complicated than for optical imagery, particularly when it comes to moving objects.

""The use of optical techniques such as optical flow is not an obvious approach for detecting motion for satellite borne or other SAR data for a number of reasons. Firstly, SAR data was traditionally acquired only on an image-by-image basis. SAR video was not possible. Images of a particular area were acquired at frequencies on the order of once per day and therefore only changes (e.g., presence of an object or absence of an object) or very slow movements (e.g., land creep) could be detected. More dynamic kinds of movements such as those discussed here would not be identifiable. On the other hand, a typical light weight SAR satellite is travelling past the scene at 7.5 km/s at 550 km above the earth with constantly changing viewing geometry. Firstly, this is much faster than the speed of any of the phenomena discussed here, and therefore it was not obvious that such motion on the surface of the Earth could be detected using SAR. Secondly, this is very far away and is quite different from looking at successive images of a static optical traffic camera to analyse traffic from a distance of tens of meters.

Historically, other techniques have been used to identify motion on the surface of the earth from SAR imagery, as described in the background section above. One reason for using other techniques relates to the motion of the SAR platform relative to the area being imaged, which is a prerequisite for SAR, and which has historically been a further deterrent to using any kind of optical technique. This additional movement between the object and the "camera" means that optical flow techniques cannot be simply applied to SAR data as they might be to optical data.

Two kinds of optical flow are known in the art, dense optical flow and sparse optical flow. In both cases, motion between consecutive frames is identified. With dense optical flow, entire frames are compared and flow vectors (speed and direction, i.e. velocity) are obtained for the area of an entire frame, up to one flow vector per pixel. Sparse optical flow provides flow vectors for particular features, e.g. depicting the edges of an object. It will be appreciated that dense optical flow calculation is more computationally expensive. In each case the result of the optical flow computation may be a two-dimensional velocity map comprising a velocity vector for each pixel, also referred to as a "quiver plot". The pixels may be down sampled in which case the pixels are grouped and the 2D velocity map may comprise a vector for each pixel group. The velocity vector is an estimate of the velocity associated with the identified motion.

The use of optical flow to identify apparent motion, as indicated at step 103, is useful in itself to obtain fast results. The estimation of apparent velocity between successive looks for at least some pixels is therefore shown as a separate operation 104 in figure 1 although this may be part of the computation of optical flow.

In the particular example where SAR echo data is obtained in a single dwell period of the satellite over the target, 25 frames may be obtained. Therefore the result of the optical flow computation, step 103, may result in 24 2D velocity maps, with each map corresponding to a consecutive pair of looks. The successive looks referred to here need not be consecutive looks. So for example the dense optical flow could be computed based on any two pairs of looks in the processed SAR data. However, it will be appreciated that several dense optical flow computations would usually be computed based on multiple looks within a time period in order to obtain a more accurate estimate of velocity than might be obtained from only two looks. It might be assumed that the velocity is constant over a period, and it may therefore be estimated from the average of multiple flow vectors obtained for that period.

In an example, the Färneback algorithm or Farneback Optical Flow technique is used to calculate the velocity maps between successive looks or the frames. This technique uses quadratic polynomials to estimate motion between two frames of a video. MatLAB code from OpenCV.org, a website dedicated to open source computer vision, was used to calculate dense optical flow using the Farneback Optical Flow technique (cv.calcOpticalFlowFarneback). Another algorithm (cv.calcOpticalFlowPyrLK) could be used to calculate sparse optical flow by tracking features points in a video. It should be emphasised that the result of step 103 is to identify apparent motion between successive looks, which, in a SAR image may not be representative of real movement from one look to another. As discussed further below, this can be due to various complications arising from the particularities of SAR imagery as opposed to optical imagery. These complications are the main reason why it would not be obvious to apply these optical flow techniques that are designed for computer vision to SAR video and why such application is not a straightforward matter. Methods of addressing these complications to estimate real motion in SAR images are disclosed below.

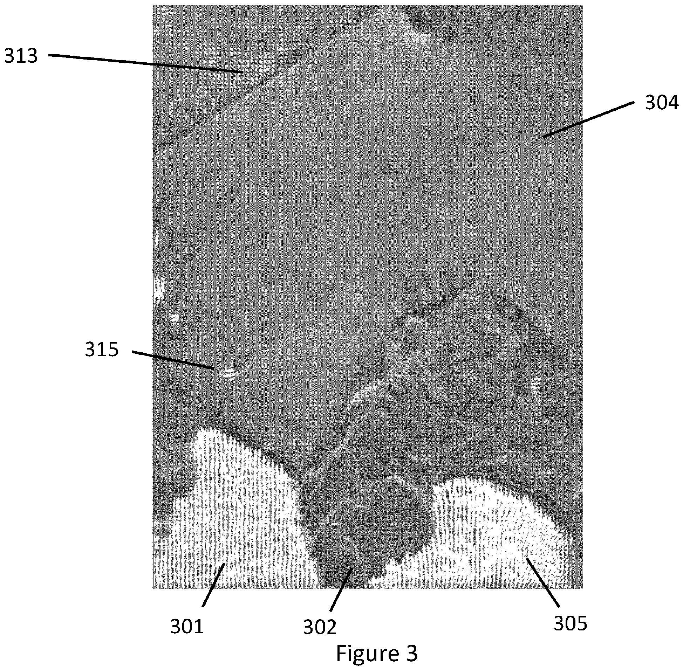

An example 2D velocity map is shown in figure 3 superimposed over a SAR image of the same area represented in figures 2A and 2B. The 2D velocity map shown in figure 3 comprises velocity vectors corresponding to respective pixel groups in the image data. In this case, each vector has a direction and magnitude representing mean optical flow over a time period. The arrows point in the direction corresponding to the movement computed by the optical flow techniques and the length of the arrow represents the magnitude. The vectors are derived by averaging velocity vectors estimated between one look and the next for several pairs of looks, as explained further below.

It should be borne in mind here that the term "optical flow" is used because the data from successive looks may be processed in an analogous way to optical image data. However it should be remembered that that the data is not derived from reflected visible light as is the case with optical images, but from SAR echo data.

The 2D velocity map of figure 3 shows mean velocity vectors obtained by taking the average of 24 individual velocity vectors corresponding to the same groups of pixels obtained using optical flow to detect apparent motion between pairs of 25 individual frames. The SAR data for the 25 individual frames or looks was acquired during a single SAR acquisition. Before the averaging, the individual velocity maps were corrected for various SAR artifacts, as described in detail further below. The mean velocity vectors are shown as arrows superimposed on the SAR image to which they correspond.

The SAR image of figure 3 comprises an area 302 of land in which no movement has been identified, as indicated by the general lack of velocity vectors in this area. This is as would be expected since the land should be fixed in the image. Small non-zero velocities may be due to noise in the SAR signal and in the subsequent processing. However, seeing that the land is not moving provides a calibration of sorts and is clearly different from the areas where large amounts of movement are detected. It will be appreciated that only part of this data may be used in the tracking of motion as described here. For example, areas may be excluded, for any reason such as they are of no interest, they are known not to be subject to movement, or the optical flow data indicates that no movement has occurred. In this example, if detecting movement on the land of area 302 is not of interest, it could be ignored in any subsequent analysis and the data can be discarded to save on computer memory, for example.

Figure 3 also shows areas of water (ocean) showing movement of various magnitudes and directions. The strongest motion is clearly shown in areas 301 and 305, corresponding to the small bays (201 and 205 from Figure 2A) on either side of area 302 (corresponding to the headland 202 of Figure 2A). Here the velocity vectors are long (high magnitude) and are generally aligned pointing into the bays. These velocity vectors correspond to the large waves coming into the bay that are clearly visible in the sequence of SAR images of which Figures 2A and 2B are part of.

Still referring to Figure 3, we can see that in area 304 behind the breakwaters there is much less movement detected. This makes sense since the water is much more still here. The movement is small but non-zero because there are still some small waves within the protected harbour. The velocity map shows more movement in area 304 than the land area 302, but the movement is much less than the movement detected in bays 301 and 305. There is also a clear distinction between the amount of movement detected outside of the breakwater in area 313 and on the other side of the breakwater which is part of the protected area 304. Here the velocity map shows that the movement is greater outside of the breakwater, wave confused movement up against the breakwater wall, which may be a result of the reflection of small waves coming in and reflecting off the breakwater. Figure 3 also shows some detected movement within the sheltered harbour at 315, corresponding to ships moving within the harbour.

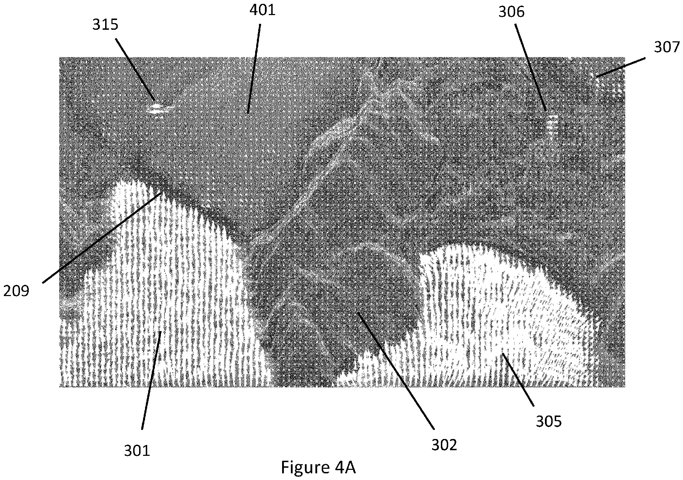

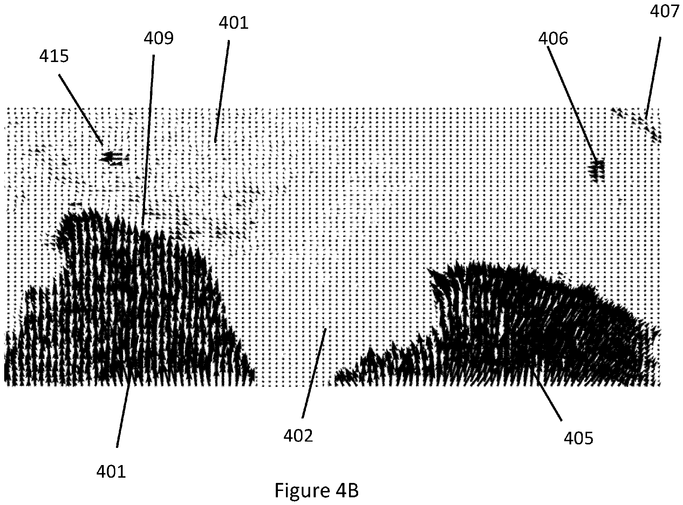

Figure 4A shows a close-up of the lower part of Figure 3 with a 2D velocity map overlaid on top of a SAR image and shows more clearly the velocity vectors in the bay heading upwards and into the bay. On the other side of breakwater 209, the water is much calmer. Also clearly visible in Figure 4 is the movement of two ships 315. The wakes from the ships are visible in the image as they approach each other. This demonstrates that the technique can also be used to detect and estimate the movement of individual objects. This could be done, for example, by first using dense optical flow to detect the motion of the ships, and then by using sparse optical flow to track the ships as they move. Although the movement on the land is generally non-zero, there is some movement detected in area 306. Detected movement on land could be due to the movement caused by lava flows, landslides, and possibly also by movement of relatively small objects such as vehicles, trains, etc. In this case, the movement at area 306 appears to be due to a bright specular reflection, for example from the flat roofs of buildings, that moves across the image as the viewing angle of the SAR satellite changes. This continuous change in backscattering intensity when viewing objects from different angles can be interpreted by optical flow algorithms as movement. Interpretation of these SAR images needs to take into account this particular artifact that can result from using multiple images taken from different angles. For example, these types of movement could be identified manually, or automatically, for example by using knowledge of the satellites speed and geometry to filter out movement in a particular range of velocities that would be expected from a changing specular reflection as a result of the imaging angle changing at a certain angular velocity.

Figure 4B shows the 2D velocity map of the lower half of Figure 3 on its own, without being overlaid on top of the SAR image to make the velocity vectors easier to see. The velocity vectors are shown as black arrows showing the mean direction and magnitude of the motion detected using dense optical flow, after correction. The black arrows are the same as the white arrows in Figure 3 and Figure 4A. Here, it can clearly be seen that the detected wave movement in bays 401 and 405 are the greatest. This is in contrast to the much smaller movements detected on the other side of breakwater 409 in harbour 401 where the water is much calmer. The movement detected on the land 402 is close to zero (the arrows are so small they appear as dots), except in the area 406 that was determined to be a specular reflection off a flat building top that moved as the satellite flew overhead and imaged from different angles. The velocity vectors at 415 correspond to the two ships that were identified. In the upper right corner of the image at area 407 there is some movement detected corresponding to area 307 in Figure 4A, and this corresponds to where the land transitions again to water, likely with smaller waves coming into the shore of the bay.

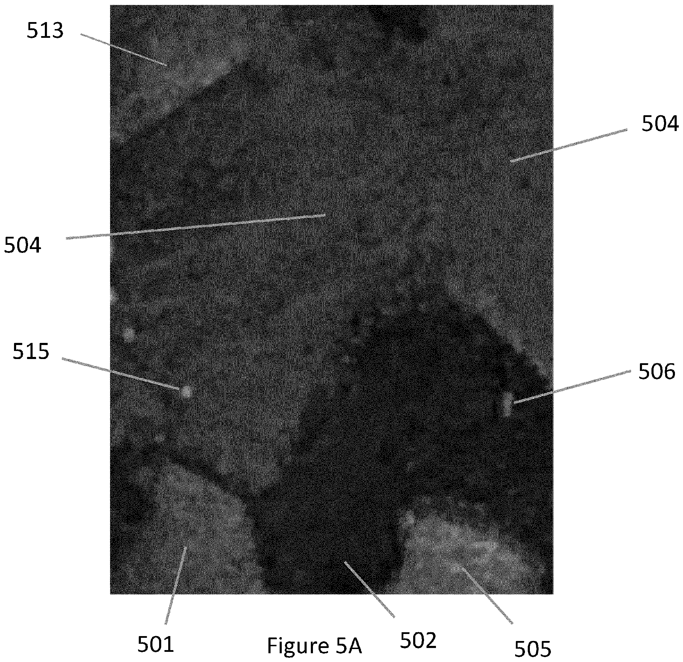

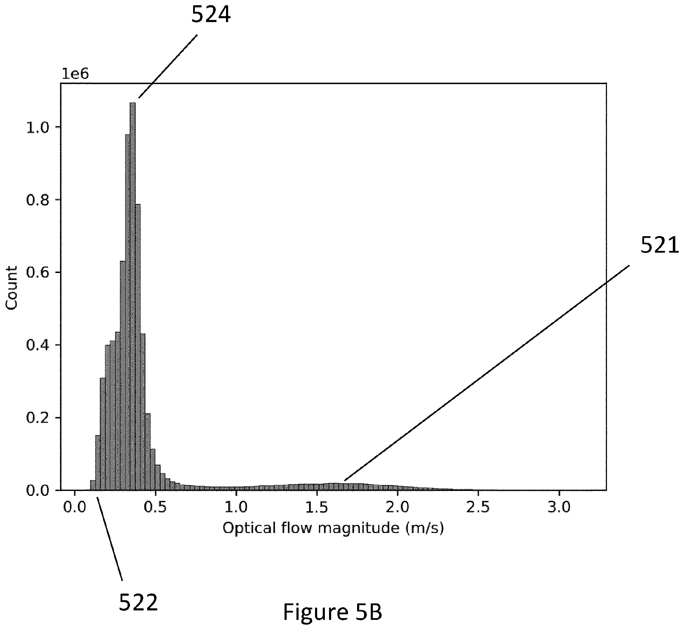

Figure 5A shows the same 2D mean velocity map overlay of figure 3, but in a different format. In Figure 5, the velocity vectors have been coded to more easily identify areas with similar velocities (both magnitude and direction). In the original colour images, the velocity vectors have been colour and brightness coded, with different colours representing different groups of vectors pointing in generally the same direction with roughly the same magnitude, and the brightness of the colour representing the magnitude of the group of vectors. In this example, the colour-coded images have been converted into grey-scale, with the different colours visible as shades of grey. Generally, darker areas correspond to areas with lower velocity, and brighter areas correspond to areas of higher velocity. It can be seen here from the shading in area 502, which is shaded mostly black, that there is very little movement in the land areas, as would be expected. By contrast, areas 501 and 502 are relatively brightly shaded, corresponding to the large amounts of wave movement into the two bays on either side of the headland. The area 504 within the protected harbour also shows up relatively dark because of the limited wave movement, but not as dark as the land area because there is still some movement detected here. Outside the breakwater in area 513 is a bit brighter again, especially right up against the breakwater, indicating slightly more wave movement here. The movement of the ships at 515 also shows up as a brighter spot. The movement of a reflection across the roof of buildings at area 506 also shows up as a small brighter region within the land area.

Figure 5B shows a histogram of the mean velocities as shown by the velocity vectors of Figure 3 and Figure 5A. The bottom axis represents the magnitude of the mean velocity flow in m/s, and the horizontal axis is the count of the number of velocity vectors at that flow rate. There are two distinct areas visible in the histogram, with a sharper peak at 524 and a lower but broader peak at 521. Peak 521 represents the higher velocity magnitudes detected in bays 301 and 305 of Figure 3, which correspond to the movement of waves coming into the bays. The range of velocities detected is in a range from approximately 1 m/s to 2.5 m/s (4 km/h to 9 km/h), with a peak at about 1.7 m/s (6 km/h). This corresponds well with what might be expected of relatively small waves coming to shore., Publicised geological data indicates that such waves would typically be travelling at under 10 km/h (2.8 m/s) and arriving on the shore about once every three seconds. The number of velocity vectors in this range (area under the curve of peak 521) is still relatively small because, despite the bays comprising the highest estimated velocities, bay 301 and bay 302 still occupy only a relatively small percentage of the area in Figure 3. The broader range of velocities in these areas is indicative of the greater variability in velocities detected in the wave motion as it approaches land, for example due to shallower areas versus deeper areas, and shore effects such as reflections and refractions of the incoming waves.

By contrast, peak 524 in the mean velocity histogram is sharper and taller. Most of the velocities detected in the image of Figure 3 are contained in this peak in the range of just over zero to approximately 1 m/s (4 km/h), with a peak occurrence at approximately 0.4 m/s (1.44 km/h). These lower velocities occur primarily in the more protected waters of harbour 304 and bay 313. The high counts in this area are a result of the fact that bay 304 and bay 317 occupy the greatest percentage of the area Figure 3. In these areas the water is much calmer and would be expected to have lower velocities (likely due to smaller wind-driven waves as opposed to incoming ocean waves). The smaller number of higher velocities detected in this range likely occur in bay 313, whereas the large number of velocities on the lower end are likely from bay 304. The sharper peak is due to the fact these smaller movements result in lower velocities with less variation within the range of the velocities being detected.

It should be noted that the estimated velocities start at slightly above zero (see 522), when we might expect more zero velocities over the land, even though the land represents only a relatively small portion of the area of Figure 3. The non-zero readings may be due to small amounts of movement detected on land, noise, artifacts from viewing the area from different angles, or a small offset in how the apparent motion is converted/corrected, for example if the single acquisition used to acquire the multiple looks is not perfectly symmetrical around a centre point. As such, these velocity magnitudes are considered to be estimates. The estimates and being able to calculate the relative magnitudes between different areas of the image quickly represents already a significant improvement over the prior art. Further corrections could be applied to improve the estimates, for example by calibrating for non-moving land and applying a general offset factor properly to "zero" the estimated velocities.

In the example mean velocity maps described above, the estimated velocities are obtained by first using dense optical flow to detect the motion in between pairs of sub-apertures, applying a correction, described further below, and then taking the mean of the corrected velocity maps. The result of the dense optical flow computation between two pairs of sub-apertures, before any correction is performed, is referred to as apparent motion, because motion may falsely appear due to SARspecific artifacts caused by the movement of the platform, the processing of the SAR data, and objects that are themselves moving. In other words, the apparent motion in the 2D velocity map between two looks or images may comprise both real motion and false or non-real motion. These SAR-related complications are why is not possible to simply apply these computer vision optical flow techniques to SAR images to detect and estimate motion, as if they were optical images. Doing so could provide velocity estimates that are inaccurate. However, a method is presented in the current disclosure that makes it possible to estimate the real motion by correcting for these SAR-related artifacts in the 2D velocity maps taken between two sub-apertures. Subsequently, the 2D velocity maps can be averaged to form the mean velocity map to detect movement within a scene and to estimate its magnitude and direction.

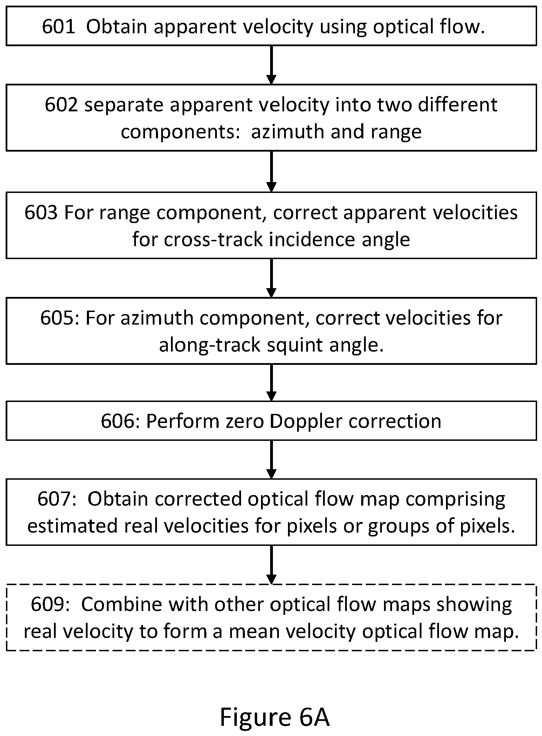

At step 105 of figure 1 the estimated apparent velocity is corrected to compensate for the relative motion between the SAR platform and the target. In other words, the apparent velocity is converted into an estimate of actual velocity by correction for the relative motion between the platform and the target. This may be done on a vector by vector basis, for example by adjusting an optical flow map to compensate for the relative motion between the platform and the target which may result in non-real motion or inaccuracy in calculation of direction or magnitude of velocity One way in which this may be achieved is described with reference to figure 6A. The corrected velocities resulting from step 105 may be used at step 106 to create an optical flow map, in other words a map of velocity vectors showing the estimated magnitude and direction of the real motion detected from the SAR imagery. Estimates for the velocity of movement in different parts of the area of interest or of objects within the area of interest can be obtained from the map of velocity vectors. After step 105, the 2D velocity map may be referred to as a corrected 2D velocity map. The 2D velocity maps illustrated here are all corrected. By repeating steps 103 and 105, for different pairs of sub-apertures taken over the period of an extended satellite dwell time, it is possible to track surface motion in terms of speed and direction during the period. Alternatively, multiple corrected 2D velocity maps can be combined together to provide an estimated velocity over the entire period, for example by estimating a mean velocity and direction. The process of correcting the computed optical is described in more detail with reference to figure 6A.

Before discussing the flow of figure 6A in detail, it should be noted by way of background that SAR imagery is different from optical imagery, such as that acquired by a camera, in a number of important ways. As noted previously, SAR imagery is more like using echolocation in sonar to form an image than taking a photograph - it relies on receiving a stream of backscattered and reflected radar echoes and then decoding this signal using signal processing techniques in order to form an image. Unlike optical imagery, which is often acquired with a camera looking straight down from an airborne or spaceborne platform, SAR imagery is also typically acquired using a side-looking geometry rather than looking straight down. If the SAR antenna was directed straight down, the strong specular reflection of the radar signal from the nadir (the area directly beneath the platform) would tend to saturate the sensor and overpower the much smaller backscattered signal that is used for SAR. As such, SAR images are typically acquired in a side-looking configuration at an angle of at least 10 degrees or more away from the vertical. For example, typical look angles could be between 10 degrees to 45 degrees for the space-borne SAR satellites used for obtaining the images used in this disclosure. Look angle ranges could be different for other satellites or types of SAR radar.

The "synthetic" part of synthetic aperture radar arises from using the motion of a SAR platform to simulate a longer antenna than is actually being used, and thus to achieve higher azimuth resolutions than would be possible with a stationary radar platform such as real aperture radar. SAR uses the change in frequency between transmitted and received radiation, due to the Doppler effect, to help determine the position from which the radiation is returned. SAR image processing is used to decode the returning SAR signal and to generate an image containing objects and features in their correct location.

Apparent motion that does not represent real motion can appear in SAR images and subsequently in the optical flow maps due to artifacts and other factors related specifically to obtaining and processing SAR data. This apparent motion needs to be corrected for to obtain the real motion. Apparent motion in SAR images can come from objects and features in the SAR image that are moving in real life. SAR images assume that objects and features are locked in place during the acquisition in order to properly geolocate them. If there was absolutely no motion on the ground, then there should not be any perceptible motion in the SAR aperture, as shown in the land area 302 of Figure 3.

However, if the objects and features being imaged by the SAR platform are not fixed in place (i.e., they are moving) they can appear to be displaced in the SAR image. The displacement can show up in the SAR image and the optical flow maps as apparent motion that can add to, subtract from, or change the direction of the real motion. The SAR processing is working properly, but moving objects and features break the assumptions of the SAR processing, resulting in artifacts that appear as apparent motion. This presents a problem for detecting and for estimating the velocity and direction of motion within a SAR image. Figure 6A shows an example of corrections that can be applied to remove or minimize non-real motion in the SAR image, and for obtaining more accurate estimates of the velocity and the direction of motion observed in a sequence of SAR images.

In addition, there may be noise that can show up in some places where there is not actually movement. Averaging or filtering the optical flow maps between each sub-aperture of a single acquisition can help to lessen the effects of noise and some of these artifacts. Generally, the impact of noise on apparent motion is relatively small, as can be seen in Figure 4A, where the area corresponding to the land 302 shows almost no movement compared to the areas corresponding to the ocean, for example, area 301 and 305.

It is proposed in the following, as part of the conversion from apparent motion to actual motion, figure 1 step 105, to correct for apparent velocity estimated from the optical flow and location information in the successive looks, which is carried into the 2d velocity graphs generated by computing optical flow, to obtain an estimate of the real motion.

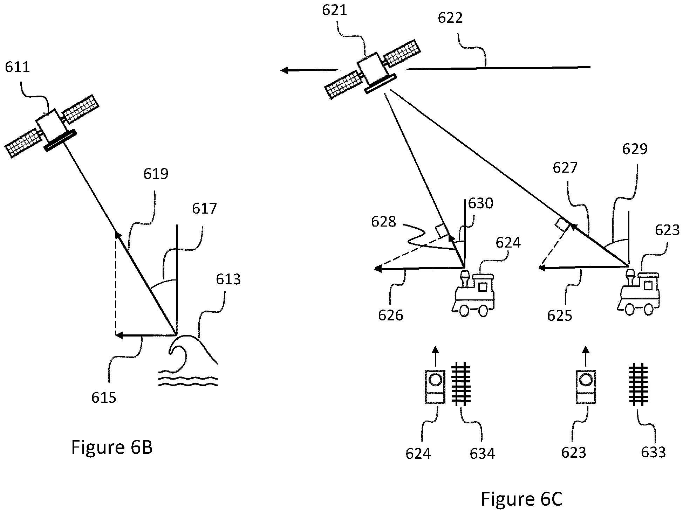

An example for the correction of apparent motion to obtain estimated real motion is shown in Figure 6A. The flow of figure 6A begins at step 601 with obtaining an apparent velocity map using optical flow between a pair of sub-apertures, as is done for example in figure 1 step 103. The velocities may be for each pixel or for each group of pixels. Each velocity measurement is a noisy estimate of the sensor facing velocity component, explained further with reference to figure 6B. The velocity measurement comprises both real velocity magnitudes and directions as well as apparent movement that can arise from artifacts in the SAR imagery due for example to moving objects and continuous changes in backscattering intensity when viewing objects from different angles. The computation of optical flow, whether sparse or dense, will usually result in a set of vectors (e.g., one for each pixel or group of pixels) indicating apparent magnitudes and directions of the detected motion at each pixel or group of pixel in the area being analyzed. The area being analyzed could be the whole image, for example when using dense optical flow techniques, or it could be just a part of an image, when using sparse optical flow techniques. It is assumed that the following steps of figure 6 are performed on all of the vectors, for example in parallel.

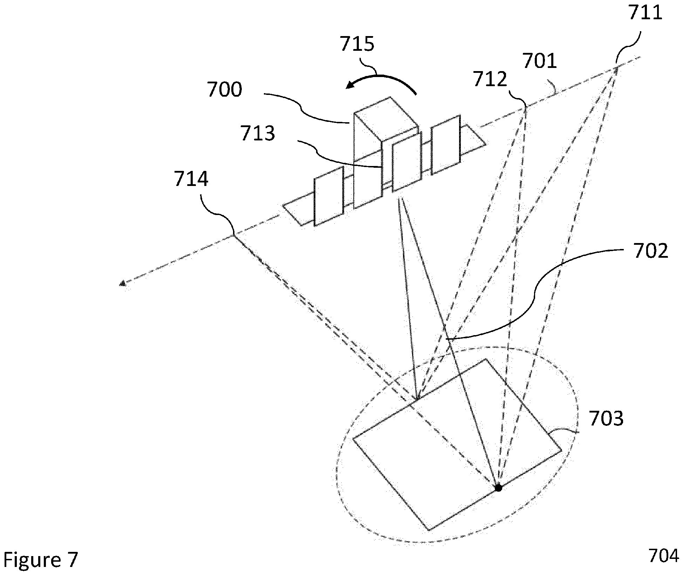

In SAR geometry two components are generally taken into account: azimuth and range. Azimuth direction refers to the direction along which the SAR platform is moving. The range direction is a direction perpendicular to the direction of motion projected onto the ground plane. These are shown more clearly in figure 7 where the dotted line 701 indicates the azimuth direction and line 702 indicates the slant range to a target at the edge of the area of interest 703. The ground range is the slant range projected onto the ground plane.

At step 602, the apparent velocity vectors from a velocity map as estimated by optical flow performed between pairs of SAR images are divided into two different components, an azimuth (along track) component and a ground range (side looking) component for each pixel. Since the dense optical flow method considers movement on a pixel-by-pixel (or pixel-group-by-pixel-group) basis, there is no need for identifying objects or to track displacement of objects. The method simply considers movement "flowing" through each pixel or group of pixels.

At step 603 the range velocity components are corrected to take into account the geometry of the side-looking SAR acquisition. In the range direction, it can be assumed that the satellite is not moving towards or away from the target point on the ground at a given point in time, since the range direction is defined as being perpendicular to the motion of the satellite.

For the purposes of the correction in the range direction, the incidence angle is the angle between a line normal to the ground plane and a line from the SAR platform to the target. If the target was directly beneath the satellite, then the incidence angle would be zero. As the target point gets further away from the nadir (the point on the ground directly beneath the satellite), the incidence angle goes up. In an example, incidence angles for the X-band SAR satellites used to obtain the example multi-looked SAR images in this disclosure can be in the range of approximately 10 degrees up to approximately 45 degrees. Different satellites or types of SAR systems may have different incident angle ranges. As noted previously, SAR satellites typically do not image straight down because the specular reflection from the nadir would swamp out the backscattered signal from the rest of the scene. As such, SAR images need to be acquired with a side-looking geometry. This allows for the information of the backscattered information to come through. However, in the case of moving objects, the imaging angle means that the observed motion is not the same as the motion over the surface of the earth in the ground plane.

Figure 6B is a schematic diagram showing a SAR satellite 611 imaging along line 619 a moving target 613 on the ground, for example represented schematically by a wave, although it could be movement of any sort, such as of objects like boats and trains, or of molten rock in the case of lava. The SAR satellite 611 is moving in the azimuth direction either directly into or out of the page, meaning that figure 6B shows the plane orthogonal to the direction of motion. Satellite 611 is imaging target 613 with a side-looking configuration with an incidence angle 617, which could for example be around 30 degrees, and could in practice be anywhere from about 10 degrees to about 45 degrees. The wave 613 is moving in the range direction along the ground plane with a velocity indicated by vector 615. Since satellite 611 is imaging the target 613 at an angle, rather than looking straight down, the movement perceived by the satellite will not be the same as the actual movement on the ground 615. Instead, satellite 611 will perceive a sensor facing velocity represented by vector 619, which is the estimated apparent motion in the range direction.

In order to correct for the difference in motion in the range direction as viewed by the satellite in order to obtain the real motion, the apparent sensor-facing velocity 619 can be multiplied by the sine of the incidence angle 617 in order to obtain the real velocity in the ground range direction:

$$x = x'sin(\Theta)$$

where x is the component 615 of the real motion in the ground range direction, x' is the perceived range velocity component 619 against the SAR sensor, and theta is the incident angle 617. For example, if the incidence angle 617 is 15 degrees and the apparent motion of the wave in the range direction as estimated by the optical flow techniques 619 is 10 m/s, the estimated real motion x of the wave in the range direction 615 is:

$$x = (10 \ m/s)(sin(15°)) = (10 \ m/s)(0.259) = 2.59 \ m/s$$

Correction in the range direction at step 603 can be carried out for each pixel or group of pixels in the optical flow map between two SAR images. The incidence angle in the range direction could be obtained, for example, from the meta data of the SAR image, or from knowledge of the orbital position of the satellite and the location of the target on the ground. Note that this is only the range component of the velocity. The direction of the total velocity is determined by both the range and azimuth components of the velocity. The final direction of each estimated real velocity vector is determined once corrections are performed on both the range and azimuth components. Also, if the apparent motion detected for the pixel or the group of pixels by the optical flow technique is zero, then according to the equation above, the estimated real motion is also zero. As such, it is not necessary to separate out pixels or groups of pixels with and without motion to only perform the corrections on those pixels or groups of pixels with movement. This provides a significant advantage making the method easy to automate and for computational efficiency.

In the azimuth direction, there is an additional complication because the satellite is moving relative to the target point on the ground. For example, an Earth Observation (EO) satellite in Low Earth Orbit (LEO) can be travelling in its orbit with a velocity of around 7.5 km/s, so the distance between the satellite and the target point on the ground in the azimuth direction can change quite quickly as the satellite approaches and passes by the target on the ground. The distance between the target shrinks as the satellite is approaching the target and reaches a minimum at the closest approach of the satellite to the target, which occurs when the target is located on a line perpendicular to the satellite's direction of motion. As the satellite passes by and moves away from the target, the distance between the satellite and the target starts increasing again. This is described below in greater detail with reference to Figure 7.

Since the SAR platform moves relative to the target, there is a Doppler frequency in the reflected and backscattered radar signal as the satellite approaches the target point and as the satellite moves away from the target point. When the satellite is passing by the target point, such that both the satellite and the target are in a plane orthogonal to the satellite's direction of motion, the Doppler frequency is instantaneously zero. In practice, a SAR image acquired with a side-looking geometry (no squinting forwards or backwards) will have a range of Doppler frequencies centered on zero. Note the Doppler effect is only apparent in the azimuth direction and may be ignored in terms of range.

As mentioned previously, the Doppler frequency resulting from the movement of the SAR platform (the satellite) relative to the target is exploited in SAR in order to provide improved azimuth resolutions that are better than what could be achieved with a similar-sized radar antenna, but no relative motion (and hence no Doppler frequencies). A larger antenna can be "synthesized" by making use of the relative movement of the SAR platform and the target. Doppler frequencies are used to more accurately locate objects and targets in the azimuth direction to provide better resolution. However, this use of the Doppler frequencies is based on the assumption that the objects and target points are non-moving. Moving objects break this assumption and will not be located correctly, because they change the Doppler frequency due to their own movement. As a result, moving objects often appear in a SAR image displaced a certain distance away from their true locations. For example, a moving train may appear in a SAR image to be displaced from the tracks that it is running on, a car may appear to be floating above a roadway, etc. Figure 6C shows schematically an example of a moving target 624 (a train) appearing in the SAR image as being displaced from the tracks 634 that it should clearly be running on. With a larger squint angle, the displacement can be larger, as shown by the displacement of target 623 from tracks 633. One way to deal with this issue to is to perform a zero Doppler correction, by removing the effect of the Doppler frequency related to the object or target's motion.

The classical way to perform zero Doppler correction in a single aperture image is to measure the displacement of an object in the SAR image and to use this to correct the Doppler frequency. The velocity of the object can then be determined. However, this can be a labour-intensive manual process, first requiring identification of the objects that have been displaced, and as such does not work as well for estimating the velocities of different types of motion, such as the surface motion of waves on water, which may cover a large area in an image and include different velocity vectors moving in different directions for different pixels or group of pixels.

In an example according to the current disclosure, it is not necessary to first identify moving objects and to manually measure displacements, or to measure displacements at all. Instead, apparent velocities are first obtained directly by using optical flow maps (either dense optical flow or sparse optical flow) between sub-apertures taken from a single acquisition, without the need for first identifying motion in an image, and then measuring displacements, which could be difficult or impossible to do, for example in the case of measuring velocities of waves. However, the results of the optical flow techniques are apparent motion and still need to be corrected to provide estimates of real motion. As described above, the component of the apparent velocity in the range direction can be corrected by using a geometrical correction. However, the Doppler frequency shift caused by the relative motion of the satellite and the target also needs to be accounted for when correcting the azimuth component of the apparent velocities of moving targets.

At step 605, the azimuth component of apparent motion obtained using optical flow between a pair of multi-looked SAR images is first corrected to take into account the geometry of the acquisition to obtain an estimate of the ground velocity. This is similar to the correction for across-track incidence angle performed on the range component in step 603, but the correction is for squint angle. Squint angle refers to the degree the satellite is looking (squinting) forwards or backwards in the azimuth direction. A squint angle of zero corresponds to the satellite imaging in a direction perpendicular to the satellite's direction of motion.

Figure 6C is a schematic diagram showing a satellite 621 travelling along from right to left in the page in azimuth direction 622. Two different moving targets 623 and 624 are shown with corresponding azimuth squint angles 629 and 630 and with corresponding apparent azimuth velocities 627 and 630. Note that the targets 623 and 624 are not directly underneath the satellite because SAR satellites are generally side-looking, and as such are either located either into or out of the page. The targets are also not necessarily being imaged at the same time. Figure 6C is intended to show how different squint angles could arise and their effect on the imaging geometry. Target 623 could be the same as target 624 but imaged as part of a later sub-aperture of the same acquisition such that the squint angle 629 is greater than the squint angle 630. The estimated ground velocity 625 for target 623 can be obtained by multiplying the apparent velocity 627 by the sine of squint angle 629. Similarly, the estimated ground velocity 626 for target 624 can be obtained by multiplying the apparent velocity 628 by squint angle 630. This can be done for every pixel or group of pixels in the optical flow map between two sub-apertures. However, a further correction needs to be performed to obtain an estimate of the real velocity in the azimuth direction.

At step 606, the azimuth component of apparent motion obtained using optical flow between a pair of multi-looked SAR images is also corrected to take into account the effect on the received Doppler frequency of moving objects. This is referred to in step 606 of figure 6 as zero Doppler correction. The magnitude of the shift in Doppler frequency for detected motion can be calculated using the following equation:

$$f' = f \times \left( \frac{c \pm v_o}{c \pm v_s} \right)$$

In this equation, $f'$ is the observed frequency, $f$ is the actual frequency of the source (target), and c is the speed of light. In addition, $v_o$ is the velocity of the observer and $v_s$ is the velocity of the target. The velocity of the observer $v_o$ is positive if the satellite is moving towards the target, and $v_s$ is positive if the target is moving away from the satellite.

Using the estimates of the real ground velocity that have been calculated at step 605, an estimate of the actual frequency can be obtained according to:

$$f = \frac{f'}{\left( \frac{c \pm v_o}{c \pm v_s} \right)}$$

The Doppler shift is then given by ($f'$ - $f$). Knowing the beam width and the pulse repetition frequency (PRF) that the SAR is operating at, the angular shift can be determined by dividing the absolute value of the Doppler shift by the PRF. The angular shift can then be turned into a distance on the ground using the imaging geometry, and estimated real motion can be obtained by subtracting the estimated azimuth velocity due to the Doppler shift from the azimuth ground velocity calculated in step 605.

These calculations are still an approximation because the azimuth velocity $v_s$ being used in the above equation has only been corrected for geometry but not yet for Doppler shift. However, any resulting residual error should be relatively small, since the largest contributing to factor to $f'$, the observed frequency, is the squint angle that the target is being observed with, and because the value of $v_o$ is typically much larger than the value of $v_s$. As an alternative, an iterative process could be applied to obtain a more precise value of $v_s$, by taking the new calculated $v_s$ and putting it back into the equation above, and then performing this process iteratively until the residual error is minimized. However, this iterative process takes more time and computational effort and may not be necessary since the single step method already gets rid of much of the residual error.

Although the steps of this method are described in this example in a certain order, they do not necessarily need to be performed in this order. In some examples, the zero Doppler correction of step 606 could be performed before the correction of velocity for squint angles in 605. In another example, the corrections for the range component in step 603 could be performed after or in parallel with the corrections for the azimuth component in steps 605 and 606.

At step 607, regardless of the method of calculation, a corrected optical flow map is obtained with estimated real velocities in both the azimuth and range directions for each pixel or group of pixels. This is an estimate of the magnitude and directions for all motion observed within a pair of SAR images or within an area of interest in the pair of SAR images, which could be adjacent sub-aperture images obtained from a single acquisition. Note that the pairs of sub-aperture images do not necessarily have to come from the same single acquisition. In an example, optical flow could be used to determine estimated real velocities from pairs of SAR images that are taken from separate SAR acquisitions. This could be used to capture relatively slow motion, for example resulting from ground creep. Instead of a real time SAR video, this could be an example of a SAR video obtained in a manner similar to time-lapse photography.

At optional step 609, it may be desirable to combine the corrected optical flow maps with other corrected optical flow maps to obtain a mean velocity optical flow map or a mean velocity flow map. In an example 25 sub-apertures are obtained from a single acquisition SAR acquisition lasting approximately 25 seconds using an extended dwell imaging mode. Optical flow is performed on pairs of adjacent sub-apertures to obtain 24 optical flow maps with apparent motion. Each optical flow map is then corrected as described above to obtain an estimate of the real velocity.

Theoretically, assuming the velocity observed is constant over the time period of the extended acquisition (e.g., 25 seconds), each corrected optical flow map is an estimate of the same velocity. However, a number of practical reasons may cause the corrected optical flow maps to differ somewhat from each other. For example, the underlying SAR images may contain speckle or other SAR artifacts, leading to noise in the optical flow maps. The optical flow algorithm may also detect movement that is not actually there, for example in the case of specular reflections on some manmade objects, such as the buildings described with respect to figure 4B.

To help filter out some of this noise and to improve the signal-to-noise ratio, all 24 corrected optical flow maps could be averaged to obtain a mean velocity map. Not all artifacts will be removed, but noise can be significant reduced and many artifacts visible in the SAR video, such as flashes occurring at a certain angle will be filtered out. Note that it is not necessary to use all of the sub-apertures in this example to obtain the mean. For example, the mean could be calculated based only on the first, middle, and last of the 24 optical flow maps. This would reduce the computational effort but could result in a lower signal to noise ratio. The particular choice would depend on the application.

Although taking the average of the corrected optical flow maps is an example of one way to estimate the real motions of things like areas, objects, and surfaces using two SAR images, other methods are also possible. For example, rather than correcting each individual optical flow map to obtain real motion first and then taking the mean, it could be beneficial (i.e., more accurate) to use the information in all of the optical flow maps by forming a matrix and solving for the real motion together, rather than solving separately and then averaging at the end. This could be done by first forming a group of equations and solving the group of equations for all of the maps simultaneously such that all the equations are satisfied to obtain an estimated real velocity for each pixel or group of pixels. This alternative method could provide better results but would be more complicated and may require more compute time and power.

## Data Acquisition

The satellite data used in the methods described here may be obtained in any suitable manner. For example, as described, the data may be obtained during a single pass of the satellite over the target area, for example from a satellite operating in spotlight mode, as will now be described in more detail.

Figure 7 is a schematic diagram of a satellite operating in spotlight mode. The dotted line 701 indicates the azimuth direction and the lines 702 indicate a slant range direction. Slant range is the distance from the satellite to a point in the target area along a line perpendicular to the azimuth direction. Ground range is the slant range projected onto the ground plane.

Figure 7 shows in exaggerated form the variation of angle of a satellite 700 in order to extend the dwell time over a target area 703, in this case an area on the earth. Traditionally, a SAR satellite would stay fixed in the orientation shown by the satellite 700 in position 713 as it travels along line 701 in the azimuth direction. As it travels, it would image to the side in a side-looking matter at a certain look angle, ranging from approximately 10 degrees up to approximately 45 degrees. This mode is known as strip mode, and the resulting image would be a long and narrow strip map, of which area 703 would be a part of. If information about area 703 is what is really desired rather than the entire strip, the entire satellite can be rotated as it passes over area 703 so that area 703 remains within the radar aperture by continuously pointing the antenna at area 703 as the satellite passes over.

In order to obtain an extended dwell spotlight acquisition for a target area on Earth, a satellite can be steered electronically and/or mechanically in order to keep a target within the radar aperture for a longer period of time. In an example, this can be achieved by "squinting" the antenna or the whole SAR platform forwards and backwards. In an example, as the satellite approaches the target, it is rotated to point forwards so it can start imaging the target earlier. As it passes the target, the satellite is in the standard side-looking geometry for a brief moment. Once the target is passed, the satellite continues to rotate to keep the target in view by pointing backwards at the target. In the azimuth direction, the imaging geometry needs to be corrected for in a similar manner to the incidence angle in the range direction. Squint angles may go from -15 degrees to +15 degrees (relative to the scene), for example.

In an example, imaging begins at point 711 on line 701. Prior to reaching point 711, the satellite is rotated to point forward by a certain amount. This is known as "squinting" forward. As satellite 700 travels to point 712, it is rotated in order to maintain the antenna pointing at 703. The rotation continues in direction 715 as the satellite passes through point 713, which is point where the satellite is imaging directly perpendicular to its direction of motion along line 701. Satellite 700 continues rotating in direction 715 to keep the target within the radar aperture until it reaches point 714, at which the imaging stops, and the satellite can be recovered to a nominal position. In an example, the duration of the imaging could be greater than 10 seconds and up to as high as 60 seconds. In the examples shown here the imaging was done over approximately 25 seconds.

The raw data to be processed comprises recordings of pulses received at the satellite, as a result of backscattered energy and reflections from a target, e.g. area on the ground, of radio energy pulses transmitted from the satellite. Data from a plurality of pulse recordings is processed to form a series of images or "looks". A "look" may be derived from a number, greater than one, of pulses.

A challenge with the formation of a look and to generate a corresponding image is to ensure that data relating to the same point on the ground is used to form a pixel. One manner in which this may be achieved is by a technique known as back projection SAR processing, in which data from different pulses is summed coherently, for example summing amplitude and phase information. One reason for performing coherent summation is to improve the resolution which may contribute to the improved resolution of velocity estimation. In other words, the multiple looks described here may be produced by back projection SAR processing.

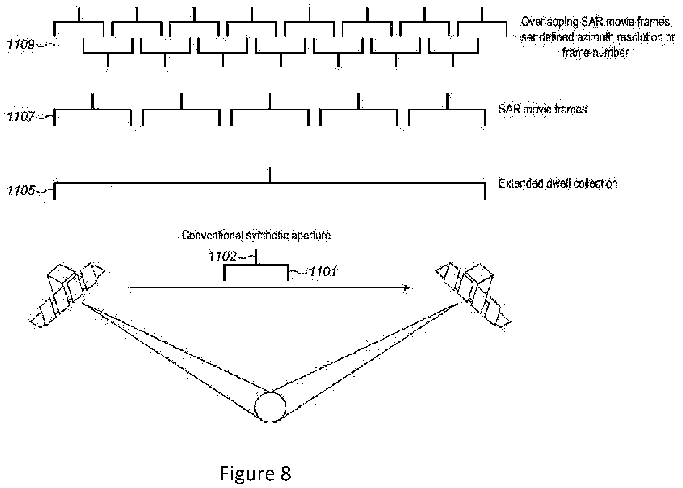

The successive looks used to compute dense optical flow may be derived from the raw data in many ways. In one example, successive looks may by formed by dividing up a single acquisition into non-overlapping time periods, with data from each time period forming a separate image or a look. In another example, successive looks may correspond to overlapping time periods within the dwell time. This is illustrated schematically in figure 8.

Antenna steering in the azimuth direction, either mechanically or electronically or both, may be used to increase the "illumination time" of a target, resulting in an increased synthetic aperture and therefore increased azimuth resolution. This is illustrated schematically in figure 8.

A set of non-overlapping movie frames is indicated at 1107, from which it can be seen that successive looks formed from a single acquisition may be used to compute dense optical flow and, if desired, to form a video comprising the SAR images acquired from each look. Diagram 1109 demonstrates that successive looks may also correspond to overlapping time periods within the dwell time. These may similarly be used to compute dense optical flow. A movie may be created from overlapping looks. Notably the centres of the apertures of successive looks are consecutive and therefore the overlapping frames may appear as consecutive images in a video sequence.

The generation of the overlapping images may be achieved with a suitable image formation algorithm that can form frames that overlap in time. Each frame may have an observation time that corresponds to the centre of its synthetic aperture. By overlapping frames, the centre aperture observation times for each frame can be closer together. This means that an arbitrary number of frames can be formed in the video and a user defined resolution can be specified for each frame.

The lower diagram in figure 8 shows, in exaggerated form, the variation of angle of a satellite in order to achieve an extended dwell time on a target. The extent of an example conventional synthetic aperture, with no mechanical steering, is indicated at 1101, with the upstanding line 1102 indicating the centre of the aperture. The possible extended dwell collection time (and associated extended angular range) is indicated at 1105. A conventional synthetic aperture corresponds to a dwell time of about 10s or less. With the extended acquisition time, an image formed using all of the information can have very high azimuth resolution, e.g., greater than 25 cm for each pixel. However, only two seconds are need for 1 metre azimuth resolution, so dividing the 10 second acquisition into five multi-looked images could provide for five images of the same target location at 1 metre azimuth resolution. Having sequential coherent SAR images of this resolution of an area that could be combined to form a SAR video, was previously very difficult if not impossible to obtain. Extended long-duration spotlight SAR according to some embodiments of this invention has been demonstrated up to 25 seconds as well as up to 30 seconds. In principle a satellite can remain pointing at a spot up to 60s or more. However, processing of the additional data would require correspondingly more onboard storage.

To give a specific example for the purpose of illustration only, for a satellite travelling 7.5 km/s at 550 km above the Earth, ignoring the curvature of the Earth, this means in 30 seconds the satellite will travel 225 km away from directly over the target. To still be pointing directly at the same point on Earth for the whole 30 second period an angle range of about 23 degrees is required. Different methods may use different ranges of angles. This may depend on factors such as, but not limited to, the ability of the mechanical steering and the capacity of the satellite on board memory, since data is usually downloaded in batches when passing over a ground station.

It will be appreciated from the foregoing that all of the methods described here benefit from the use of an agile micro satellite. Hitherto with traditional satellites it was possible to obtain only a few looks without reducing the resolution of each look. A suitably sized micro satellite can rotate to observe a target for an extended period of time (up to 60 seconds).

This provides them the capability of achieving many frames of imagery at the same resolution as the range resolution over a period of time.

It should be noted that the satellite described here may be travelling in or configured to travel in a low earth orbit.

The satellite may be configured for side-looking, as is known in the art. It may have both leftlooing and right-looking capability.

The satellite may use x-band radar, operating at a frequency of 8 - 12 GHz.

The satellite may comprise antennas together with amplifiers and a power distribution system which collectively form image acquisition apparatus of the satellite, as is known to those skilled in the art.

In an example of a SAR satellite suitable for collecting the SAR data for detecting and estimating motion according to the current disclosure, the SAR satellite may comprise one or more phased array antennas. The effective radar aperture depends on the area of the one or more antennas, in other words the greater the total antenna area the greater the aperture. The aperture is also referred to in the art as the satellite receive window. In another example, a SAR satellite comprising a SAR antenna and a reflector can also be used for collecting SAR data suitable for detecting and estimating motion according to the current disclosure.

The amplifiers of the image acquisition apparatus may have a two-way data communication link with a computing system forming the satellite payload, to send data to the computing system to be processed, for example to generate looks as described elsewhere here. Alternatively, raw data may be transmitted from the satellite for processing by a remote computing system, for example at a ground station or elsewhere.

Raw SAR data may be stored in the satellite in memory. In an example, 30 seconds of imagery can be stored at full resolution (bandwidth). More can be stored at lower resolution (e.g., 60 seconds at half resolution). In an example, a micro satellite has a 150 MBs download link. At this data rate it takes about 3 minutes to download the 30 seconds of full resolution imagery data.

During operation, for example during spotlight mode, around 5000 pulses per second may be transmitted. This means that 27 pulses might be in the air at any given time.

In an example, the satellite is orbiting Earth in a low-earth orbit. A low-earth orbit can be from 160 km to 1000 km above the surface of the Earth. Examples of Earth-observation satellites based on SAR according can have orbits of between 450 km and 650 km above the Earth. In an example according to the current invention, a satellite has an orbit that is 550 km above the Earth's surface. At an orbit of 550 km above the Earth, for example, the satellite is effectively traversing the ground at about 7.5 km/s, or 27,000 km/h. Most satellites in this this orbit will traverse the Earth at a speed that is in the range of 7-8 km/s.

In order to dwell on and keep the SAR antenna pointed to a point on the earth, a micro satellite used to implement any of the methods described here may be designed to be able to rotate with a slew rate ability of the order of 1 °/sec. This has not been achievable mechanically with traditional satellites. A satellite such as a micro satellite can slew at a speed necessary to maintain pointing at a spot on the earth for about 10 minutes from horizon to horizon. However, at the extremes of this range the distance to the spot or target being imaged is too far to get a good SAR image, so there is a smaller practical dwell time. In an example, a satellite can produce 12 images of a 6 km x 6 km area with a dwell time of 25 seconds. In an example, a satellite can point to a single point on Earth and achieve good images for a dwell time of up to 60 seconds.

## Further Results

Some further results obtained using a method as described in figures 1 and 6 will now be described.

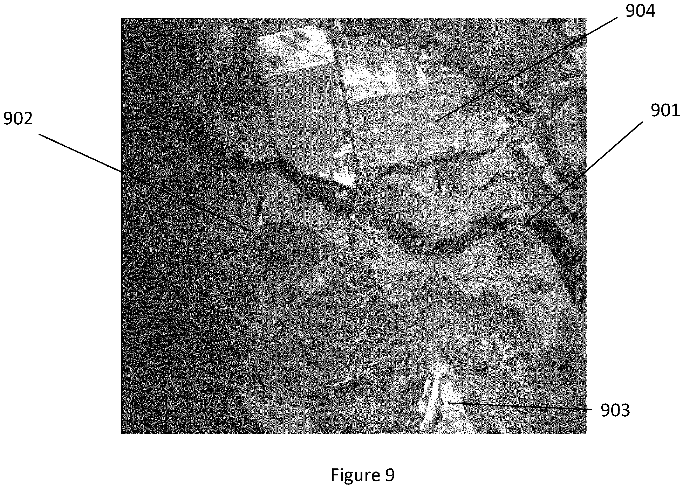

Figure 9 is an example of a SAR image taken from a satellite, similar to figure 2A and 2B, in this case showing an area comprising a large river 901 cutting across the middle of the image, a tributary in the form of a small river 902 is visible feeding into the larger river, and an area of swamp land is visible in the lower part of the image in area 903. In area, the bright returns correspond to ponds or other areas of standing water where the angle of incidence is such in the image that there is a bright reflection from the surface of the water. An agricultural area with fields is visible in area 904 above the large river 901. As this is a single SAR image, it is difficult to see where there might be movement in this image, particular for movement that occurs over a wider area. The image of Figure 9 is one of a sequence of multi-looked images taken using an extended dwell acquisition of around 25 seconds.

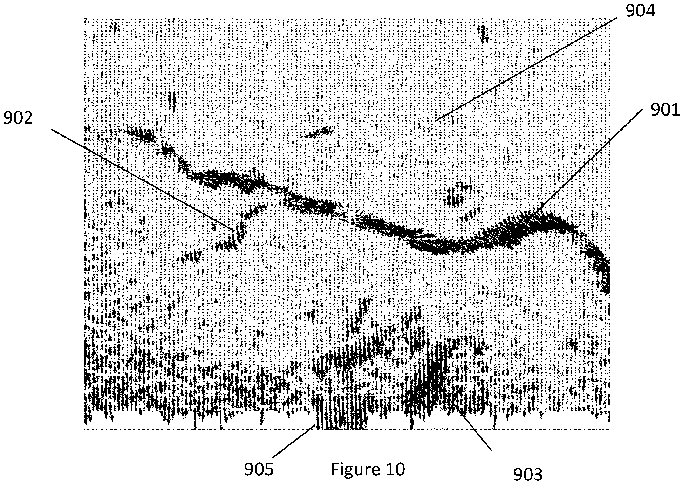

Figure 10 is a 2D mean velocity map or graph formed from an average of optical flow computations using successive SAR images of the area shown in figure 9. As with figure 3, arrows are vectors indicating the magnitude and velocity of movement detected in the area of interest. Unlike, figure 3, this velocity map is not overlaid over the original SAR image. However, it is clear from the mean velocity map where the large river 901 is located by the significant amount of movement detected on the surface of the water, whereas the agricultural area 904 shows almost no movement detected. The movement could be due to current in the river moving objects and surface features downstream. This is supported by the fact the direction of the velocity vectors is generally pointing downstream in river 901. Waves and other surface features caused by wind could also be contributing to the detected movement, and to fact that the detected movement is not always directly downstream where the current might be expected to flow.

Still referring to Figure 10, movement is also visible where the small river 902 is located. However, the movement here is less, and the velocity vectors are mostly pointing down rather than along the river. This suggests that the current in the small river is relatively low, and that the movement being detected is likely waves or ripples caused by wind. Similarly, movement is detected in the swampy area 903 where no current is expected, and so the movement here is also likely caused by wind causing ripples and waves over standing water.

Figure 10 also exhibits some of the noise that can occur in optical maps obtained from SAR images. At the bottom of Figure 10 there are some relatively large velocity vectors, for example at 905, that are most likely caused by SAR processing or by movement in the antenna beam pattern that causes what is known as a "range gradient" in SAR images. Filtering can remove some of this noise, and there may be alternative ways to remove or mask the noise, but it is important to recognize that there are different sources of noise in SAR images as compared to optical images.

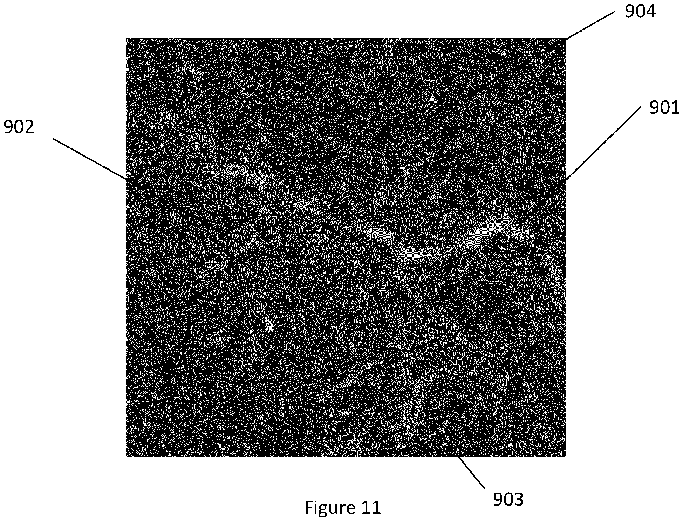

Figure 11 is a colour and brightness coded 2D mean velocity map based on the velocity map of figure 10, where velocity vectors of similar magnitude and direction have been coloured differently, with the largest detected movements showing up brighter and areas of relatively low movement showing up darker. This helps to visualize the movement over the whole of the area being imaged, and to quickly identify the areas where significant movement is occurring. As expected, the movement in river 901 appears the brightest, while the movement in the small river 902 and in the swamping area 903 are similarly coloured and less bright. Agricultural area 904 shows up quite dark due to the minimum amount of movement detected here. Any small non-zero amounts of movement may be due to wind effects, movement of smaller objects such as vehicles, or even simply noise in the image.

It should be noted here that when obtaining images of water from satellites, such as the ocean or the water found in rivers 901 and 902 and in the swampy area 903, it is advantageous if the range of incidence angles is less than 20° or less than 15°. Water tends to have a lower level of radar backscatter when imaged by a satellite using X-band radar at higher incidence angles, e.g., greater than 25°. At the same time, SAR imaging is typically carried out at incidence angles of 10° or greater to avoid swamping out the SAR signal with the strong specular reflection from the nadir. Therefore, a particularly good range for imaging areas to detect movement in water, when there is an interest in the surface movement of water, could be in the range of 10° to 15° degrees. Higher ranges are still possible, but the signal to noise ratio may be less. To achieve a particular range of angles, either the data acquisition, e.g. satellite operation, can be controlled to limit the incidence angles, or only data from suitable incidence angles may be used. When tracking movements of other materials, such as lava flows and traffic flows, larger incidence angles may be usable.

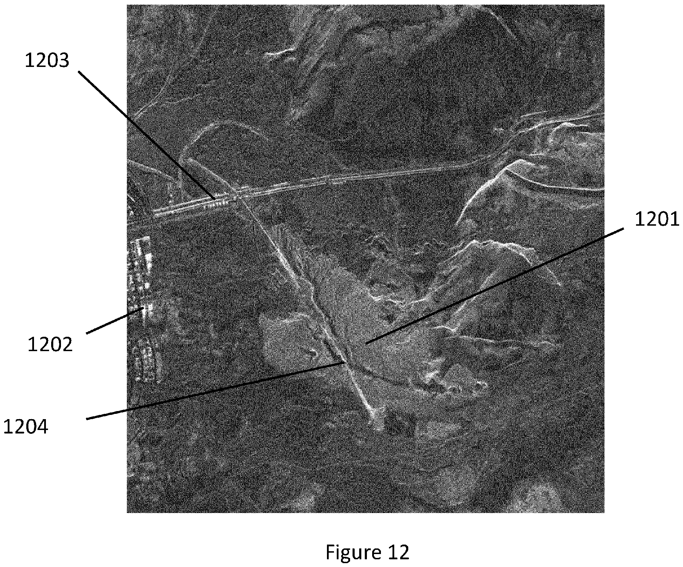

Figure 12 is an example of a satellite SAR image showing various features, such as a lava field 1201, houses 1202, and a road 1203. This image is of a recent volcanic eruption in Iceland and is one look from a series of multiple looks formed from a single acquisition. A dark line is visible at 1204 that shows the fissure that has opened up. As this is an active eruption, lava is flowing outwards from the fissure. This is obviously a dangerous situation, especially for the inhabitants of the houses at 1202. It would be very useful for emergency officials and decision makers to be able to estimate the direction and speed of movement of the lava. It would be too dangerous to assess this from the ground, and atmospheric conditions (e.g., wind and smoke) may also make it unsafe to assess from the air. As such, imaging the area from space can have significant benefits. However, optical satellites would only work during the daytime and the area is not obscured by cloud and smoke. Also, a single optical image would not provide any movement information. A SAR satellite can image at night and through cloud and smoke, providing an advantage over optical satellites, and the images can then be used to detect and estimate the movement in the area of interest.

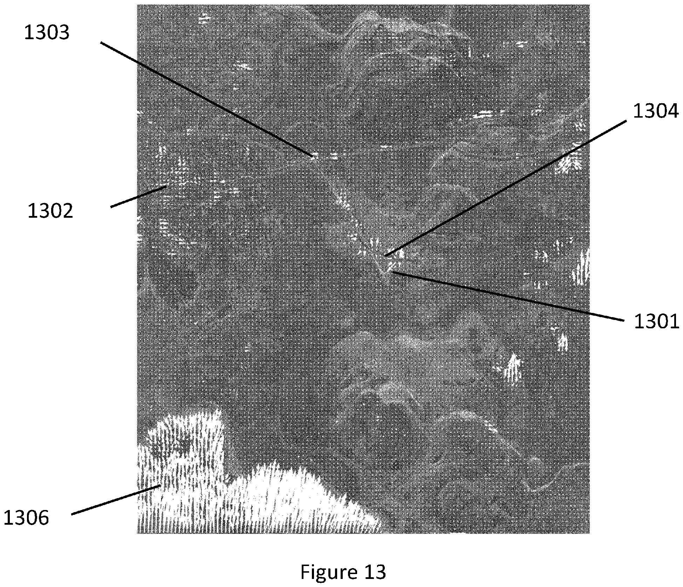

Figure 13 shows a 2D mean velocity map superimposed over a zoomed-out version of the SAR image of Figure 12. The 2d mean velocity map is obtained from performing optical flow analysis between adjacent looks of the multi-looked image. In the mean velocity map, movement is clearly visible indicating in the lava field 1301 as lava flows outwards from both sides of fissure 1304. Also visible in the lower left-hand corner of figure 13, but not visible in figure 9, is water where the ocean meets the land. The greater amount of movement and the greater velocities of the movement detected in the water 1306 due to wave action is in contrast to the much more viscous and relatively slow-moving lava flows. Some motion can also be seen on the roads and amongst the houses, which may correspond to smaller objects such as vehicles travelling along the road, or to artifacts resulting from specular reflections from man-made objects moving as the angle of the satellite changes, for example from transmission lines or railway tracks.

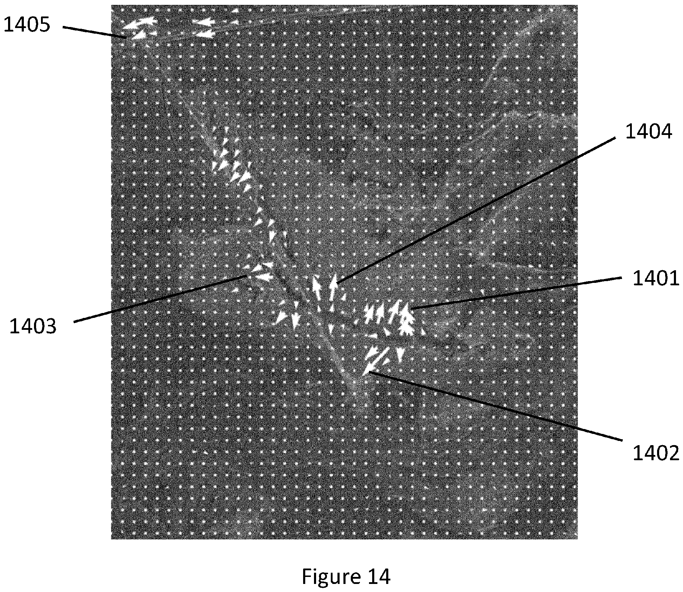

Figure 14 is a zoomed-in view of the lava flow area 1401, showing more clearly the magnitude and direction of the lava flows 1402, 1403, and 1404. As can be seen the lava is flowing out from the fissure in the middle of the image. The velocity of the lava flow is estimated to be in the range of about 0.7 - 1.8 m/s (2.5 - 6.5 km/h), with values in the upper half of this range being associated with the fastest lava flows shown at 1402 and 1404, and values in the lower half of this range being associated with the lava flow 1403 headed towards houses 1202 in Figure 9. This estimate of real velocities, while not exact, can still be very helpful, for example, for scientists and government authorities to develop an estimate of the amount of time it would take for the lava to reach inhabited areas or major infrastructure.

**Computer Architecture**

Any of the computing systems described herein may be combined in a single computing system with multiple functions. Similarly the functions of any of the computing systems described herein may be distributed across multiple computing systems.

Some operations of the methods described herein may be performed by software in machine readable form e.g. in the form of a computer program comprising computer program code. Thus some aspects of the invention provide a computer readable medium which when implemented in a computing system cause the system to perform some or all of the operations of any of the methods described herein. The computer readable medium may be in transitory or tangible (or non-transitory) form such as storage media include disks, thumb drives, memory cards etc. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The embodiments described above are largely automated. In some examples a user or operator of the system may manually instruct some steps of the method to be carried out.

In the described embodiments of the invention the system may be implemented as any form of a computing and/or electronic system as noted elsewhere herein. For example the ground station may comprise such a computing and/or electronic system. Such a system may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software, may be provided at the computing-based device to enable application software to be executed on the device.

The term "computing system" is used herein to refer to any device with processing capability such that it can execute instructions. Those skilled in the art will realise that such processing capabilities may be incorporated into many different devices and therefore the term "computing system" includes PCs, servers, smart mobile telephones, personal digital assistants and many other devices.

It will be understood that the benefits and advantages described above may relate to one embodiment or may relate to several embodiments. The embodiments are not limited to those that solve any or all of the stated problems or those that have any or all of the stated benefits and advantages.

Any reference to "an" item or "piece" refers to one or more of those items unless otherwise stated. The term "comprising" is used herein to mean including the method steps or elements identified, but that such steps or elements do not comprise an exclusive list and a method or apparatus may contain additional steps or elements.

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

Aspects of the foregoing disclosure are described in the following clauses:

1. A method of detecting motion in a target area by processing data obtained from synthetic aperture radar "SAR" image acquisition apparatus on a moving platform, wherein the data has been processed to form looks at the target area centred on different points in time;
the method comprising:
computing optical flow to identify apparent motion between successive looks.

2. The method of clause 1 wherein the computation of optical flow comprises estimating an apparent velocity for at least some pixels between successive looks.

3. The method of clause 2 comprising correcting the estimated apparent velocity for relative motion between the platform and the target.

4. The method of clause 2 wherein the correcting comprises deriving azimuth and range components from the apparent velocity.

5. The method of clause 4 wherein the correction comprises correcting the range component of the apparent velocity for incidence angle.

6. The method of clause 4 or clause 5 wherein the correction comprises correcting the azimuth component of the apparent velocity for squint angle.

7. The method of clause 4, clause 5, or clause 6 comprising subtracting estimated azimuth velocity due to the Doppler shift from the azimuth component of the apparent velocity.

8. The method of any preceding clause wherein the computation of optical flow comprises generating a 2D velocity map of the target area.

9. The method of clause 8 when dependent on clause 3 comprising generating a corrected 2D velocity map based of corrected velocities and combining multiple corrected 2D velocity maps via a mathematical function.

10. The method of clause 9 wherein the mathematical function comprises taking the mean corrected velocities on a pixel-by-pixel basis or on a group of pixels by group of pixels basis.

11. The method of any preceding clause wherein the data obtained from synthetic aperture radar "SAR" image acquisition apparatus comprises pulse recordings resulting from the backscatter and/or reflection from the target area of radio energy pulses transmitted from the satellite, wherein each look is formed using data from a series of pulses.

12. The method of clause 11 wherein the processor is further configured to perform coherent summation of data from a series of pulses to form the successive looks at the target.

13. The method of clause 11 or clause 12 wherein the successive looks correspond to overlapping time periods.

14. The method of any preceding clause wherein the synthetic aperture radar "SAR" image acquisition apparatus is spaceborne and carried by a satellite operating in orbit around Earth.

15. The method of clause 13 wherein the data is obtained during a single acquisition during a single pass of the satellite over the earth.

16. The method of clause 14 or 15 wherein the data is obtained during a dwell time of the satellite over the target area greater than 10 seconds.

17. The method of clause 15 or 16 wherein the dwell time is obtained through mechanical steering of the satellite.

18. The method of clause 14 wherein the data is obtained during separate acquisitions.

19. The method of any preceding clause wherein the optical flow comprises dense optical flow.

20. The method of any of clauses 1 to 18 wherein the optical flow comprises sparse optical flow.

21. The method of any preceding clause wherein the data is acquired with a side-looking geometry with an incidence angle of 10 degrees or greater.

22. The method of any preceding clause wherein the data is acquired using a phased-array radar.

23. The method of any preceding clause wherein the target area comprises water and the computation of optical flow is used to detect movement of the surface of the water.

24. The method of any preceding clause wherein the target area is susceptible to volcanic activity and the computation of optical flow is used to detect flow of lava.

25. The method of any preceding clause wherein the computation of optical flow is used to detect movement of manmade objects in the target area.

26. A two-dimensional velocity map showing motion in a target area detected according to the method of any preceding clause.

27. A computer readable medium, comprising instructions which when implemented in a computing system cause the system to perform a method according to any of clauses 1 to 25.

**Claims**

1. A method of detecting motion in a target area by processing data obtained from synthetic aperture radar "SAR" image acquisition apparatus on a moving platform, wherein the data has been processed to form looks at the target area centred on different points in time;
the method comprising:
computing optical flow to identify apparent motion between successive looks.

2. The method of claim 1 wherein the computation of optical flow comprises estimating an apparent velocity for at least some pixels between successive looks.

3. The method of claim 2 comprising correcting the estimated apparent velocity for relative motion between the platform and the target.

4. The method of claim 3 wherein the correcting comprises deriving azimuth and range components from the apparent velocity.

5. The method of claim 4 wherein the correction comprises correcting the range component of the apparent velocity for incidence angle.

6. The method of claim 4 or claim 5 wherein the correction comprises correcting the azimuth component of the apparent velocity for squint angle.

7. The method of claim 4, claim 5, or claim 6 comprising subtracting estimated azimuth velocity due to the Doppler shift from the azimuth component of the apparent velocity.

8. The method of any of claims 3 to 7 wherein the computation of optical flow comprises generating a 2D velocity map of the target area, further comprising generating a corrected 2D velocity map of corrected velocities and combining multiple corrected 2D velocity maps based on different pairs of successive looks via a mathematical function.

9. The method of claim 8 wherein the mathematical function comprises taking the mean corrected velocities on a pixel-by-pixel basis or on a group of pixels by group of pixels basis.

10. The method of any preceding claim wherein the data obtained from synthetic aperture radar "SAR" image acquisition apparatus comprises pulse recordings resulting from the backscatter and/or reflection from the target area of radio energy pulses transmitted from the satellite, wherein each look is formed using data from a series of pulses.

11. The method of claim 11 wherein the processor is further configured to perform coherent summation of data from a series of pulses to form the successive looks at the target.

12. The method of claim 11 or claim 12 wherein the successive looks correspond to overlapping time periods.

13. The method of any preceding claim wherein the synthetic aperture radar "SAR" image acquisition apparatus is spaceborne and carried by a satellite operating in orbit around Earth, and wherein the data is obtained during a single acquisition during a single pass of the satellite over the earth.

14. A two-dimensional velocity map showing motion in a target area detected according to the method of any preceding claim.

15. A computer readable medium, comprising instructions which when implemented in a computing system cause the system to perform a method according to any of claims 1 to 25.

101 process the data to form looks at a target area on Earth centered on different points in time

103 compute optical flow to identify apparent motion between successive looks

104 estimate an apparent velocity for at least some pixels between successive looks

105 correct estimated apparent velocity to compensate for relative motion between the platform and the target

106 create optical flow map

Figure 1

Figure 2A

Figure 2B

Figure 3

Figure 4A

Figure 4B

Figure 5A

Figure 5B

601 Obtain apparent velocity using optical flow.

602 separate apparent velocity into two different components: azimuth and range

603 For range component, correct apparent velocities for cross-track incidence angle

605: For azimuth component, correct velocities for along-track squint angle.

606: Perform zero Doppler correction

607: Obtain corrected optical flow map comprising estimated real velocities for pixels or groups of pixels.

609: Combine with other optical flow maps showing real velocity to form a mean velocity optical flow map.

Figure 6A

Figure 6B

Figure 6C

Figure 7

Figure 8

Figure 9

Figure 10

Figure 11

Figure 12

Figure 13

Figure 14

| | | Europäisches Patentamt European Patent Office Office européen des brevets | **EUROPEAN SEARCH REPORT** | **Application Number** EP 24 16 7768 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 18 155 A1 (DORNIER GMBH [DE]) 13 November 1997 (1997-11-13) | 1-15 | INV. G01S13/90 |
| Y | * figures 1-3 * * page 2, line 2 - page 5, line 25 * | 3-9 | |
| X | HAIQING SUN ET AL: "Ocean dynamic information obtaining based on SAR ocean images matching", RADAR (RADAR), 2011 IEEE CIE INTERNATIONAL CONFERENCE ON, IEEE, 24 October 2011 (2011-10-24), pages 752-755, XP032123965, DOI: 10.1109/CIE-RADAR.2011.6159650 ISBN: 978-1-4244-8444-7 | 1,2, 10-15 | |
| Y | * figure 3; table 1 * * page 752, right-hand column, lines 16-29 * * page 753, right-hand column, lines 56-30 * | 3-9 | |
| X | FILIPPO BIONDI: "COSMO-SkyMed Staring Spotlight SAR Data for Micro-Motion and Inclination Angle Estimation of Ships by Pixel Tracking and Convex Optimization", REMOTE SENSING, vol. 11, no. 7, 29 March 2019 (2019-03-29) , pages 1-22, XP093202603, CH ISSN: 2072-4292, DOI: 10.3390/rs11070766 | 1,2, 10-15 | TECHNICAL FIELDS SEARCHED (IPC) G01S |
| Y | * figures 1, 5, 8, 14 * * page 1, lines 19-20 * * page 9, line 1 - page 11, line 9 * | 3-9 | |
| | -/-- | | |

The present search report has been drawn up for all claims

| Place of search | Date of completion of the search | Examiner |
|---|---|---|
| Munich | 11 September 2024 | Rodríguez González |

EPO FORM 1503 03.82 (P04C01)

Europäisches
Patentamt

European
Patent Office

Office européen
des brevets

## EUROPEAN SEARCH REPORT

**Application Number**

EP 24 16 7768

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OUCHI K: "ON THE MULTILOOK IMAGES OF MOVING TARGETS BY SYNTHETIC APERTURE RADARS", IEEE TRANSACTIONS ON ANTENNAS AND PROPAGATION, IEEE, USA, vol. AP-33, no. 8, 1 August 1985 (1985-08-01), pages 823-827, XP000672080, ISSN: 0018-926X, DOI: 10.1109/TAP.1985.1143684 * abstract; figures 2-4 * | 1-15 | |
| X | YANG WEI ET AL: "Moving Target Azimuth Velocity Estimation for the MASA Mode Based on Sequential SAR Images", IEEE JOURNAL OF SELECTED TOPICS IN APPLIED EARTH OBSERVATIONS AND REMOTE SENSING, IEEE, USA, vol. 10, no. 6, 1 June 2017 (2017-06-01), pages 2780-2790, XP011656877, ISSN: 1939-1404, DOI: 10.1109/JSTARS.2016.2641744 [retrieved on 2017-07-19] * figures 11, 14-17 * * page 2784, left-hand column, line 4 - page 2785, right-hand column, line 2 * * page 2787, left-hand column, line 15 - page 2788, left-hand column, line 3 * | 1-15 | **TECHNICAL FIELDS SEARCHED (IPC)** |

The present search report has been drawn up for all claims

| Place of search | Date of completion of the search | Examiner |
|---|---|---|
| Munich | 11 September 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 7768

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | | Publication date |
|---|---|---|---|---|---|
| DE 19618155 | A1 | 13-11-1997 | DE | 19618155 A1 | 13-11-1997 |
| | | | FR | 2748572 A1 | 14-11-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023285432 A